# EUROPEAN PATENT APPLICATION

(11) **EP 4 598 063 A1**
(43) Date of publication of application: **06.08.2025**
(21) Application number: 22960047.3
(22) Date of filing: 29.09.2022
(51) Int. Cl.: H04W 4/02

(54) **FORWARDER INDICATION METHOD, FORWARDER, AND NETWORK DEVICE**

(71) Applicant: FUJITSU LIMITED, Kawasaki-shi, Kanagawa 211-8588 (JP)
(72) Inventor: ZHANG, Lei, Beijing 100022 (CN); JIANG, Qinyan, Beijing 100022 (CN); TIAN, Yan, Beijing 100022 (CN); WANG, Xin, Beijing 100022 (CN)
(74) Representative: Haseltine Lake Kempner LLP
(86) International application number: PCT/CN2022/122674
(87) International publication number: WO 2024/065410

(57) **Abstract**

Embodiments of the present disclosure provide an indicating method for a repeater, a repeater and a network device. The method includes: the repeater receives at least two configurations overlapping in a first time; and the repeater determines a forwarding beam and/or a forwarding state of the repeater in the first time according to the at least two configurations.

## Description

### TECHNICAL FIELD

The present disclosure relates to the technical field of communication.

### BACKGROUND

Compared with traditional 3G (third generation mobile communication technology) and 4G (fourth generation mobile communication technology) systems, a 5G (fifth generation mobile communication technology) system can provide a greater bandwidth and a higher data rate, and can support more types of terminals and vertical services.

To this end, in addition to traditional telecommunication spectrums, the 5G system is also deployed on new spectrums, frequencies of the new spectrums are significantly higher than frequencies of the traditional telecommunication spectrums used by 3G and 4G systems. For example, the 5G system may be deployed at millimeter wave bands (28GHz, 38GHz, 60GHz and above, etc.).

According to the propagation law of a wireless signal, the higher a frequency of a carrier where it is located, the more serious the fading of the signal during propagation. Therefore, in actual deployment, compared to previous 3G, 4G systems, the 5G system more needs a method for cell coverage enhancement, in particular a 5G system deployed in a millimeter wave band. How to better enhance 5G system cell coverage and how to efficiently indicate a coverage area become one of urgent problems to be solved.

It should be noted that the above introduction to the technical background is just to facilitate a clear and complete description of the technical solutions of the present disclosure, and is elaborated to facilitate understanding of persons skilled in the art. It cannot be considered that these technical solutions are known by persons skilled in the art just because these solutions are elaborated in the Background of the present disclosure.

### SUMMARY

For at least one of the above problems, embodiments of the present disclosure provide an indicating method for a repeater, a repeater and a network device. The repeater has a capability of communicating with the network device, is capable of better strengthening signal coverage under a network configuration and coping with environmental changes (for example, reducing interference to other network devices and terminal equipments during forwarding), is capable of efficiently indicating the repeater and improving the transmission efficiency of an entire network, moreover is further capable of reducing system power consumption and saving energy overhead.

According to one aspect of the embodiments of the present disclosure, an indicating method for a repeater is provided, including:
a repeater receives at least two configurations overlapping in a first time; and
the repeater determines a forwarding beam and/or a forwarding state of the repeater in the first time according to the at least two configurations.

According to another aspect of the embodiments of the present disclosure, a repeater is provided, including:
a receiving unit configured to receive at least two configurations overlapping in a first time; and
a determining unit configured to determine a forwarding beam and/or a forwarding state of the repeater in the first time according to the at least two configurations.

According to a further aspect of the embodiments of the present disclosure, an indicating method for a repeater is provided, including:
a network device transmits at least two configurations overlapping in a first time to a repeater;
wherein the at least two configurations are used by the repeater to determine a forwarding beam and/or a forwarding state of the repeater in the first time.

According to another aspect of the embodiments of the present disclosure, a network device is provided, including:
a transmitting unit configured to transmit at least two configurations overlapping in a first time to a repeater;
wherein the at least two configurations are used by the repeater to determine a forwarding beam and/or a forwarding state of the repeater in the first time.

According to a further aspect of the embodiments of the present disclosure, a communication system is provided, including:
a network device configured to transmit at least two configurations overlapping in a first time to a repeater; and
the repeater configured to determine a forwarding beam and/or a forwarding state of the repeater in the first time according to the at least two configurations.

One of advantageous effects of the embodiments of the present disclosure lies in: the repeater receives at least two configurations overlapping in a first time; and the repeater determines a forwarding beam and/or a forwarding state of the repeater in the first time according to the at least two configurations. Thereby, it can not only efficiently indicate the repeater and improve the transmission efficiency of an entire network, but also can reduce unnecessary interference and reduce system power consumption and save energy overhead.

Referring to the later description and drawings, specific implementations of the present disclosure are disclosed in detail, indicating a mode that the principle of the present disclosure may be adopted. It should be understood that the implementations of the present disclosure are not limited in terms of a scope. Within the scope of the spirit and terms of the attached claims, the implementations of the present disclosure include many changes, modifications and equivalents.

Features that are described and/or illustrated with respect to one implementation may be used in the same way or in a similar way in one or more other implementations and in combination with or instead of the features in the other implementations.

It should be emphasized that the term "comprise/include" when being used herein refers to presence of a feature, a whole piece, a step or a component, but does not exclude presence or addition of one or more other features, whole pieces, steps or components.

### BRIEF DESCRIPTION OF DRAWINGS

An element and a feature described in a drawing or an implementation of the embodiments of the present disclosure may be combined with an element and a feature shown in one or more other drawings or implementations. In addition, in the drawings, similar labels represent corresponding components in several drawings and may be used to indicate corresponding components used in more than one implementation.

The included drawings are used to provide a further understanding on the embodiments of the present disclosure, constitute a part of the Specification, are used to illustrate the implementations of the present disclosure, and expound the principle of the present disclosure together with the text description. Obviously, the drawings in the following description are only some embodiments of the present disclosure. Persons skilled in the art may further obtain other drawings according to these drawings under the premise that they do not pay inventive labor. In the drawings:
FIG. 1 is a schematic diagram of an application scenario of the embodiments of the present disclosure;
FIG. 2 is a schematic diagram of a NCR in the embodiments of the present disclosure;
FIG. 3 is a schematic diagram of NCR forwarding in the embodiments of the present disclosure;
FIG. 4 is another schematic diagram of NCR forwarding in the embodiments of the present disclosure;
FIG. 5 is a schematic diagram of an indicating method for a repeater in the embodiments of the present disclosure;
FIG. 6 is an example diagram of at least two configurations in the embodiments of the present disclosure;
FIG. 7 is an example diagram of determining beams in the embodiments of the present disclosure;
FIG. 8 is another example diagram of determining beams in the embodiments of the present disclosure;
FIG. 9 is another example diagram of determining beams in the embodiments of the present disclosure;
FIG. 10 is another example diagram of determining beams in the embodiments of the present disclosure;
FIG. 11 is another example diagram of determining beams in the embodiments of the present disclosure;
FIG. 12 is another example diagram of determining beams in the embodiments of the present disclosure;
FIG. 13 is another example diagram of determining beams in the embodiments of the present disclosure;
FIG. 14 is another example diagram of determining beams in the embodiments of the present disclosure;
FIG. 15 is another example diagram of determining beams in the embodiments of the present disclosure;
FIG. 16 is another example diagram of determining beams in the embodiments of the present disclosure;
FIG. 17 is another example diagram of determining beams in the embodiments of the present disclosure;
FIG. 18 is another example diagram of determining beams in the embodiments of the present disclosure;
FIG. 19 is another example diagram of determining beams in the embodiments of the present disclosure;
FIG. 20 is another example diagram of determining beams in the embodiments of the present disclosure;
FIG. 21 is an example diagram of determining states in the embodiments of the present disclosure;
FIG. 22 is another example diagram of determining states in the embodiments of the present disclosure;
FIG. 23 is another example diagram of determining states in the embodiments of the present disclosure;
FIG. 24 is another example diagram of determining states in the embodiments of the present disclosure;
FIG. 25 is another example diagram of determining states in the embodiments of the present disclosure;
FIG. 26 is another example diagram of determining states in the embodiments of the present disclosure;
FIG. 27 is another example diagram of determining states in the embodiments of the present disclosure;
FIG. 28 is another example diagram of determining states in the embodiments of the present disclosure;
FIG. 29 is another example diagram of determining states in the embodiments of the present disclosure;
FIG. 30 is another example diagram of determining states in the embodiments of the present disclosure;
FIG. 31 is a schematic diagram of a repeater in the embodiments of the present disclosure;
FIG. 32 is another schematic diagram of an indicating method for a repeater in the embodiments of the present disclosure;
FIG. 33 is a schematic diagram of a network device in the embodiments of the present disclosure;
FIG. 34 is a schematic diagram of an electronic device in the embodiments of the present disclosure.

### DETAILED DESCRIPTION

Referring to the drawings, through the following Specification, the aforementioned and other features of the present disclosure will become obvious. The Specification and the drawings specifically disclose particular implementations of the present disclosure, showing partial implementations which may adopt the principle of the present disclosure. It should be understood that the present disclosure is not limited to the described implementations, on the contrary, the present disclosure includes all the modifications, variations and equivalents falling within the scope of the attached claims.

In the embodiments of the present disclosure, the term "first" and "second", etc. are used to distinguish different elements in terms of appellation, but do not represent a spatial arrangement or time sequence, etc. of these elements, and these elements should not be limited by these terms. The term "and/or" includes any and all combinations of one or more of the associated listed terms. The terms "include", "comprise" and "have", etc. refer to the presence of stated features, elements, members or components, but do not preclude the presence or addition of one or more other features, elements, members or components.

In the embodiments of the present disclosure, the singular forms "a/an" and "the", etc. include plural forms, and should be understood broadly as "a kind of" or "a type of", but are not defined as the meaning of "one"; in addition, the term "the" should be understood to include both the singular forms and the plural forms, unless the context clearly indicates otherwise. In addition, the term "according to" should be understood as "at least partially according to......", the term "based on" should be understood as "at least partially based on......", unless the context clearly indicates otherwise.

In the embodiments of the present disclosure, the term "a communication network" or "a wireless communication network" may refer to a network that meets any of the following communication standards, such as Long Term Evolution (LTE), LTE- Advanced (LTE-A), Wideband Code Division Multiple Access (WCDMA), High-Speed Packet Access (HSPA) and so on.

And, communication between devices in a communication system may be carried out according to a communication protocol at any stage, for example may include but be not limited to the following communication protocols: 1G (generation), 2G, 2.5G, 2.75G, 3G, 4G, 4.5G, and future 5G, New Radio (NR) and so on, and/or other communication protocols that are currently known or will be developed in the future.

In the embodiments of the present disclosure, the term "a network device" refers to, for example, a device that accesses a terminal equipment in a communication system to a communication network and provides services to the terminal equipment. The network device may include but be not limited to the following devices: a Base Station (BS), an Access Point (AP), a Transmission Reception Point (TRP) node, a broadcast transmitter, a Mobile Management Entity (MME), a gateway, a server, a Radio Network Controller (RNC), a Base Station Controller (BSC) and so on.

The base station may include but be not limited to: a node B (NodeB or NB), an evolution node B (eNodeB or eNB), a 5G base station (gNB) and an IAB donor, etc., and may further includes a Remote Radio Head (RRH), a Remote Radio Unit (RRU), a relay or a low power node (such as femto, pico, etc.). And the term "base station" may include their some or all functions, each base station may provide communication coverage to a specific geographic region. The term "cell" may refer to a BS and/or its coverage area, which depends on the context in which this term is used.

In the embodiments of the present disclosure, the term "a User Equipment (UE)" refers to, for example, a device that accesses a communication network and receives network services through a network device, or may also be called "Terminal Equipment (TE)". The terminal equipment may be fixed or mobile, and may also be called a Mobile Station (MS), a terminal, a user, a Subscriber Station (SS), an Access Terminal (AT) and a station and so on.

The terminal equipment may include but be not limited to the following devices: a Cellular Phone, a Personal Digital Assistant (PDA), a wireless modem, a wireless communication device, a handheld device, a machine-type communication device, a laptop computer, a cordless phone, a smart phone, a smart watch, a digital camera and so on.

For another example, under a scenario such as Internet of Things (IoT), the terminal equipment may also be a machine or apparatus for monitoring or measurement, for example may include but be not limited to: a Machine Type Communication (MTC) terminal, a vehicle-mounted communication terminal, a Device to Device (D2D) terminal, a Machine to Machine (M2M) terminal and so on.

To enhance coverage, the 3GPP Rel-17 study introduced an RF repeater to forward transmission between a terminal equipment (UE) and a network device (base station). For the network device and the terminal equipment, the RF repeater introduced in Rel-17 is transparent, that is, the network device and the terminal equipment do not know existence of the RF repeater.

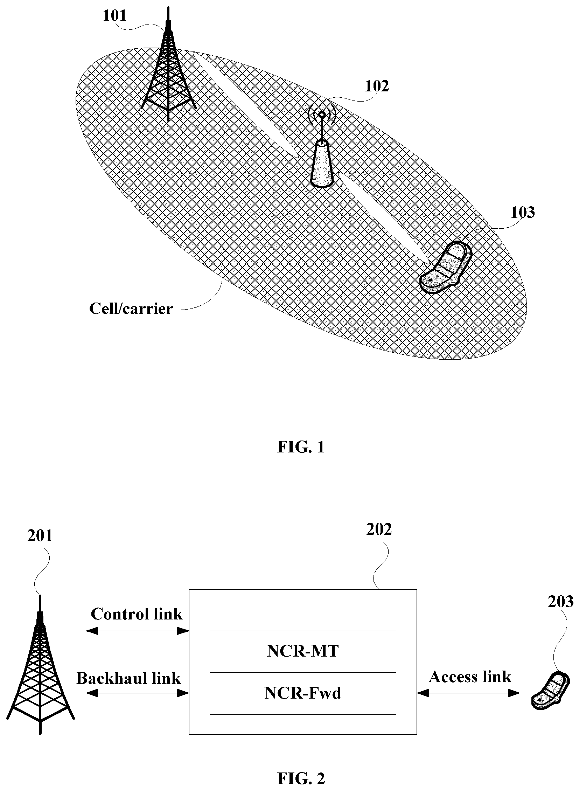

FIG. 1 is a schematic diagram of an application scenario of embodiments of the present disclosure. As shown in FIG. 1, for convenience of description, description is made by taking "a network device (such as a 5G base station gNB) 101, a repeater 102 and a terminal equipment (such as a UE) 103" as an example, the present disclosure is not limited to this.

As shown in FIG. 1, the terminal equipment 103 establishes a connection with and communicates with the network device 101. In order to increase the quality of communication, a channel/signal transmitted between the terminal equipment 103 and the network device 101 is forwarded via the repeater 102. Channel/signal interaction among the network device 101, the terminal equipment 103 and the repeater 102 may adopt a beam-based receiving and transmitting method. The beam may be a fixed beam or an adaptive beam.

As shown in FIG. 1, the network device 101 may have a cell/carrier, the network device 101, the repeater 102 and the terminal equipment 103 may perform forwarding/communication in the cell; however, the present disclosure is not limited to this, for example, the network device 101 may further have other cells/carriers.

In the embodiments of the present disclosure, transmission of existing or future implementable services may be carried out between the network device and the terminal equipment. For example, these services may include but be not limited to: enhanced Mobile Broadband (eMBB), massive Machine Type Communication (mMTC), Ultra-Reliable Low-Latency Communication (URLLC), Vehicle to Everything (V2X) communication and so on.

A traditional repeater does not have a capability of communicating with a network device. Thus, although the traditional repeater can help enhance signal strength, it is not flexible enough to cope with complex environmental changes. Deploying the traditional repeater in a 5G network (particularly in a high-frequency 5G network) may possibly cause unnecessary interference with other network devices and/or terminal equipments, thereby reducing the transmission efficiency (e.g., throughput) of the entire network. In order to make forwarding of the repeater more flexible to adapt to the characteristics of a 5G network, the network device needs to assist the repeater and can configure the forwarding of the repeater according to the operational situation of the network.

To enhance NR coverage, 3GPP Rel-18 considers a network-controlled repeater (NCR) scheme to forward a signal between a network device and a terminal equipment. The NCR may communicate directly with the network device via a control link to assist a forwarding operation of the NCR.

FIG. 2 is a schematic diagram of an NCR in the embodiments of the present disclosure. As shown in FIG. 2, NCR 202 is configured between the network device 201 and the terminal equipment 203. NCR 202 may include two modules/components: a mobile terminal of a repeater (NCR-MT) and a forwarding module of the repeater (NCR-Fwd); the NCR-Fwd is also called a routing unit of an NCR (NCR-RU). The NCR-MT is mainly used to communicate with a network device, and the NCR-Fwd is mainly used to forward a signal between a network device and a terminal equipment.

As shown in FIG. 2, the NCR in the embodiments of the present disclosure may have three links: a control link (C-link), a backhaul link (BH link) for forwarding, and an access link (AC link). The C-link is used for communication between an NCR and a network device. The BH link is used for a repeater to receive a to-be-forwarded signal from a network device, or, forward a signal on an AC link (such as a terminal equipment) to the network device. The AC link is used for a repeater to forward a signal from a network device (e.g., to a terminal equipment), or, to receive a signal for being forwarded on the BH link (e.g., a to-be-forwarded signal from the terminal equipment).

The inventor recognizes that a 5G system is more complex than previous 3G, 4G systems, for example, is capable of supporting more types of services and terminal types, and for another example, needs to be deployed in multiple frequency bands and scenarios, etc. Compared with traditional RF repeaters, the NCR needs to have a beam-based transceiving (forwarding) function.

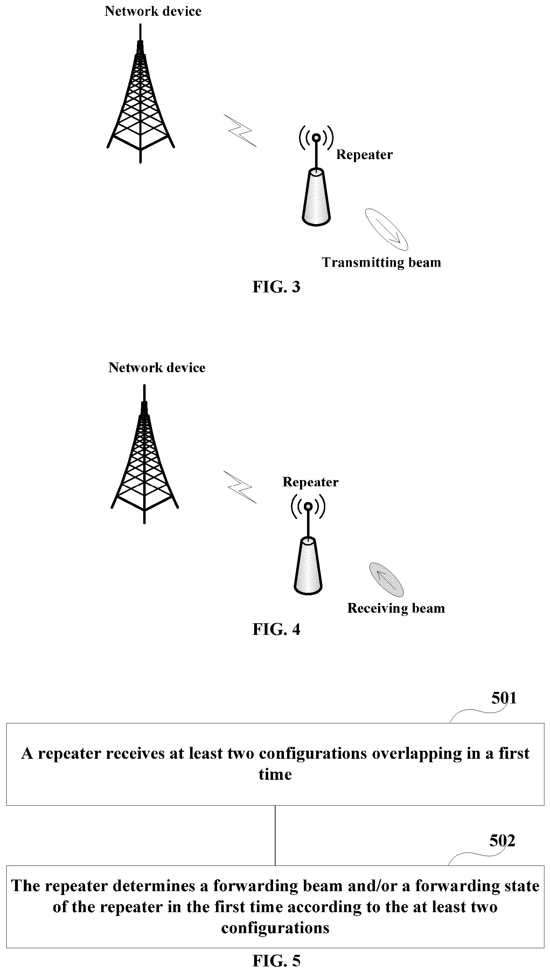

FIG. 3 is a schematic diagram of NCR forwarding in the embodiments of the present disclosure. As shown in FIG. 3, a repeater uses a transmitting beam on an AC link to forward out a signal from a network device. FIG. 4 is another schematic diagram of NCR forwarding in the embodiments of the present disclosure. As shown in FIG. 4, a repeater uses a receiving beam on an AC link to receive a signal for being forwarded to a network device.

The inventor recognizes that the 5G system uses more advanced MIMO technology, a 5G base station is capable of shaping a narrower beam, and serves one or more terminal equipments in a cell by using beam swiping. The 5G base station will not always serve a terminal equipment covered by the NCR, and when the 5G base station does not serve the terminal equipment covered by the NCR, the NCR may suspend forwarding signals, so as to reduce interference to other surrounding devices, improve a transmission signal-to-noise ratio of the other devices, thus to improve the throughput of the entire network.

In addition, a main function of the NCR is to enhance signal coverage of a cell base station in some regions, and the coverage area of the NCR is smaller, so there is a situation in which a region covered by the NCR does not have a terminal equipment that needs to be served within a period of time (for example, there is no terminal equipment that is in an RRC connected state, or no terminal equipment has a service transmission demand). Under this circumstance, how the base station instructs the NCR to implement forwarding efficiently at different times becomes an urgent problem to be solved.

Various implementations of the embodiments of the present disclosure will be described below with reference to the drawings. These implementations are exemplary only and are not limitations to the present disclosure.

**In** the embodiments of the present disclosure, a repeater may communicate with a network device, the repeater may receive a communication channel/signal transmitted by the network device, and demodulate/decode the channel/signal, thereby obtaining information transmitted by the network device to the repeater, the signal processing process is hereinafter referred to as "communication". The repeater may further forward a channel/signal transmitted between the network device and the terminal equipment, the repeater does not demodulate/decode the channel/signal, may perform amplification and other processing, the signal processing process is hereinafter referred to as "forwarding". "Communication" and "forwarding" are collectively referred to as "transmission". In addition, "perform transmission or reception on an AC link" may be equivalent to "perform forwarding on an AC link", and "perform transmission or reception on a control link" may be equivalent to "perform communication on a control link". The above terms are only for the sake of description, and do not constitute restrictions on the present disclosure.

For the sake of simplicity, the channel/signal that performs direct communication between a network device and a repeater or between a third device (such as a terminal equipment) and a repeater may be called a communication signal. When transmitting the communication signal, the repeater needs to perform encoding and/or modulation, and when receiving the communication signal, the repeater needs to perform decoding and/or demodulation. In addition, the channel/signal forwarded by a repeater may be called a forwarded signal, the repeater may perform signal processing such as amplification on the forwarded signal, but will not perform decoding and/or demodulation.

In the embodiments of the present disclosure, the repeater may also be expressed as a transponder, a radio frequency repeater, a relay, a radio frequency relay; or may also be expressed as a transponder node, a repeater node, a relay node, an intelligent transponder, an intelligent repeater, an intelligent relay, an intelligent transponder node, an intelligent repeater node, an intelligent relay node, etc., the present disclosure is not limited to this.

In the embodiments of the present disclosure, the network device may be a device of a serving cell of a terminal equipment, or a device of a cell where a repeater is located, or a device of a serving cell of a repeater, or a parent node of a repeater. The present disclosure does not limit the name of the repeater, as long as the device with said functions can be achieved, all are included in the scope of the repeater of the present disclosure.

In the embodiments of the present disclosure, a beam may also be expressed as a lobe, a reference signal (RS), a transmission configuration indication (TCI), and a spatial domain filter, etc.; or, may further be expressed as a beam index, a lobe index, a reference signal index, a transmission configuration indication index, and a spatial filter index, etc. The reference signal is e.g. a channel state information reference signal (CSI-RS), a sounding reference signal (SRS), an RS used for a repeater, or an RS transmitted by the repeater, etc. The TCI may further be expressed as TCI state. The embodiments of the present disclosure are not limited to this.

### Embodiments of a first aspect

The embodiments of the present disclosure provide an indicating method for a repeater, which is described from a repeater side.

FIG. 5 is a schematic diagram of an indicating method for a repeater in the embodiments of the present disclosure. As shown in FIG. 5, the method includes:
501, a repeater receives at least two configurations overlapping in a first time; and
502, the repeater determines a forwarding beam and/or a forwarding state of the repeater in the first time according to the at least two configurations.

It should be noted that the above FIG. 5 is only schematic description of the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 5.

By adopting the implementations of the present disclosure, a network device may indicate to the repeater two or more configurations each of which corresponds to a time duration, and the repeater determines a forwarding beam and/or a forwarding state associated with the time duration of each configuration according to the two or more configurations. Therefore, the embodiments of the present disclosure may reduce computational complexity of a network device for planning scheduling schemes and improve scheduling flexibility, thereby reduce demands for network device updates due to deployment of a new-type repeater (transponder) and reduce influence on existing network deployment.

In some embodiments, a network device may indicate to an NCR N configurations each of which corresponding to a time period, the N configurations overlapping at least in a first time within the time periods of the N configurations. These configurations may also be called patterns, etc., the present disclosure is not limited to this. Description is made by taking patterns as examples in the following embodiments.

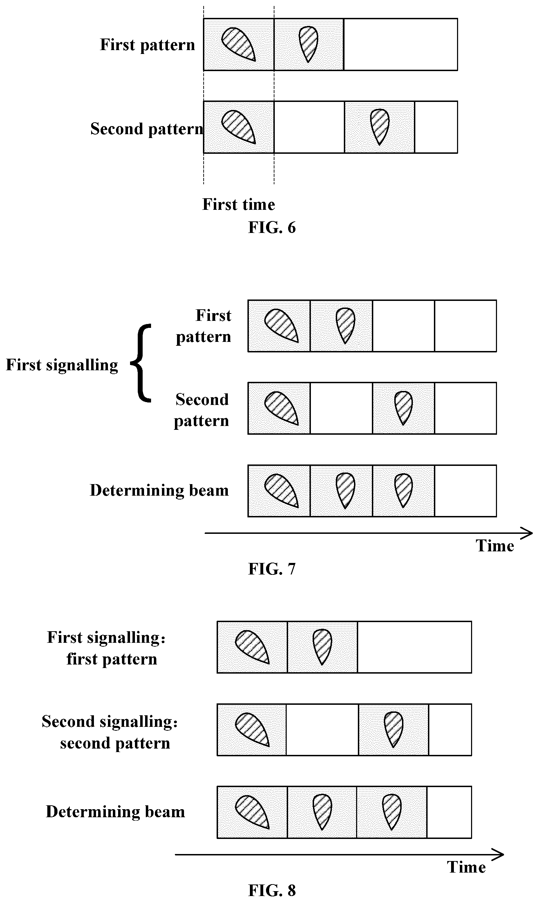

FIG. 6 is an example diagram of at least two configurations in the embodiments of the present disclosure. For example, as shown in FIG. 6, the NCR may receive a first pattern and a second pattern (first configuration and second configuration), indicating configuration information related to a same time period (a first time). As shown in FIG. 6, the first pattern and the second pattern overlap at least in a first time (a first time unit).

In some embodiments, the at least two configurations are configurations of the same type. For example, the at least two configurations are used to indicate the forwarding beam. For another example, the at least two configurations are used to indicate the forwarding state.

In some embodiments, the at least two configurations are configurations of different types. For example, one configuration is used to indicate the forwarding beam, and at least another configuration is used to indicate the forwarding state.

In some embodiments, the forwarding beam is a beam on a backhaul link and/or a beam on an access link.

In some embodiments, the at least two configurations are used to indicate a forwarding beam on the access link and/or a forwarding beam on the backhaul link.

In some embodiments, at least one of the at least two configurations is used to indicate a forwarding beam on the access link, and at least another configuration is used to indicate a forwarding beam on the backhaul link.

In some embodiments, at least one of the at least two configurations is used to indicate a forwarding beam on the access link, and at least another configuration is used to indicate the forwarding state.

In some embodiments, the forwarding state is an OFF state and/or a non-OFF state. When the NCR is in the OFF state, the NCR-Fwd is in the OFF state (the NCR-Fwd stops forwarding, or, the NCR-Fwd does not perform forwarding), and/or, the NCR-MT is in the OFF state (the NCR-MT does not communicate with a network device, or, the NCR-MT does not receive and/or transmit a signal).

The forwarding state is an OFF state and/or a non-OFF state, which may further be the following: the forwarding state is an ON state and/or a non-ON state, or, the forwarding state is an OFF state and/or an on state, or, the forwarding state is an active state and/or a sleep state, or, the forwarding state is an active state and/or an inactive state, or, the forwarding state is a non-sleep state and/or a sleep state.

In some embodiments, the first time includes one or more time units, the time units being at least one of the following: a symbol, a slot, or a subframe. The present disclosure is not limited to this.

In some embodiments, the at least two configurations are carried by one signaling.

For example, they may be carried by one radio resource control (RRC) signaling, or by one physical downlink control channel (PDCCH) or downlink control information (DCI), or by one physical downlink shared channel (PDSCH), or by one MAC CE, etc., the present disclosure is not limited to this.

For another example, the network device indicates at least two forwarding beam configurations to the NCR via one RRC signaling. One or more forwarding beam configurations may be used to forward semi-persistent data channels or semi-persistent, periodic reference signals (such as SPS-PDSCH, CG-PUSCH, SPS-CSI, Periodic CSI, etc.) required by the terminal equipment served by the NCR, and at least one or more other configurations may be used to forward common channels/signals (such as SSB, RACH, etc.) required by the terminal equipment served by the NCR. Since these data channels and signals have periodicity, adopting this indicating method via RRC signaling may reduce signaling overhead, improve time-frequency resource utilization efficiency, and increase actual data transmission throughput of a network.

For a further example, the network device indicates at least two transmitting beam configurations to the NCR via one PDCCH (or downlink control information (DCI)). One or more forwarding beam configurations may be used to forward data channels and/or reference signals required by a terminal equipment served by the NCR, and at least one or more other configurations may be used to forward data channels and/or reference signals required by another terminal equipment served by the NCR. Adopting this indicating method may also reduce signaling overhead, improve time-frequency resource utilization efficiency, and increase actual data transmission throughput of a network. And, the required data channels and/or reference signals may be single scheduling or transmission, adopting the PDCCH to carry the indication may provide sufficient flexibility for the single scheduling or transmission, which not only meets latency requirements in emergency circumstances, but also may reduce reserved transmission resources and increase time-frequency usage efficiency.

In some embodiments, the at least two configurations are carried by at least two signaling.

For example, they may be carried via at least one of the following: RRC signaling, PDCCH, PDSCH or MAC CE; or any combination thereof.

In some embodiments, the at least two signaling are signaling of the same type.

For example, the at least two signaling are PDCCHs, or are RRC signaling, or are MAC CEs. Or, for another example, the at least two signaling received at different times are the same DCI format, or are the same RRC signaling, or are the same MAC CE. This implementation method may provide timeliness for network scheduling, and therefore the network device can timely indicate the NCR how to forward a signal according to a realistic situation of the network scheduling.

In some embodiments, the at least two signaling are signaling of different types.

For example, one signaling is a PDCCH, another signaling is RRC signaling and/or MAC CE, the PDCCH may be used to indicate the NCR a configuration needed for forwarding once scheduled channel or signal, and the RRC signaling and/or MAC CE may be used to indicate the NCR a configuration needed for forwarding periodic channel or signal.

Or, for another example, one signaling is a DCI format, the other signaling is another DCI format (for example, specifically used to carry a forwarding beam, or to schedule NCR-MT data transmission and indicate the forwarding beam). When the network device schedules the NCR-MT to receive a downlink data channel or to transmit an uplink data channel, etc., the network device may indicate the NCR a forwarding configuration via the DCI used for scheduling the data channel. When the network device does not need to schedule the NCR-MT to receive or transmit and only needs to indicate the NCR a forwarding configuration, the network device may use a dedicated DCI to indicate the forwarding configuration to the NCR.

Or, one signaling is RRC signaling, the other signaling is another RRC signaling.

For a further example, a plurality of patterns may be configured via a certain signaling, and one of the patterns may be activated or deactivated via another signaling. In this way, this may provide flexibility for network scheduling, and the network device may indicate the NCR how to forward a signal according to a realistic situation of the network scheduling.

In some embodiments, the repeater determines the first time and/or the time durations which include the first time according to one or more signaling carrying the at least two configurations and/or a predefined rule.

In some embodiments, the repeater determines the first time and/or the time durations which include the first time according to other signaling and/or predefined rules.

In some embodiments, s configurations of the at least two configurations are periodic configurations; where, s is greater than or equal to 1 and less than or equal to N, N being the number of the at least two configurations.

For example, periods of the s periodic configurations are identical. For another example, in the s periodic configurations, at least two of them are with different periods.

In some embodiments, at least one of the signaling carrying the at least two configurations is further used to indicate at least part of configurations of the at least two configurations.

For example, the at least part of configurations includes a period and/or a starting position, or, a period and/or an offset. It may be indicated by signaling indicating a pattern, or by other signaling, or may be determined by the NCR itself according to a pre-agreed rule (for example, the network device indicates time for forwarding to the NCR via other signaling).

For another example, the at least part of configurations includes beginning of the time durations or the first time.

The above text schematically describes configurations in the embodiments of the present disclosure, and the following text first describes situations of the forwarding beam.

In some embodiments, an n-th configuration of the at least two configurations is used to indicate a forwarding beam to which the first time or the time duration including the first time corresponds; where, n is greater than or equal to 1 and less than or equal to N, N being the number of the at least two configurations.

In some embodiments, m configurations of the at least two configurations are at least used to indicate one or more forwarding beams related to the first time; where, m is greater than or equal to 1 and less than or equal to N, N being the number of the at least two configurations.

In some embodiments, forwarding beams indicated by the m configurations are all first beams, and the repeater determines that the first time corresponds to the first beam.

For example, in a first time unit within the time durations, if there are at least two patterns indicating forwarding beams related to the first time unit, and the forwarding beams indicated by the least two patterns are identical, the NCR determines that the forwarding beams are used.

FIG. 7 is an example diagram of determining beams in the embodiments of the present disclosure, in which a first pattern and a second pattern are configured and/or activated by first signaling. As shown in FIG. 7, the first pattern and the second pattern overlap in the first time unit and the forwarding beams are identical, the NCR determines to correspond to the beams in the first time unit.

As shown in FIG. 7, the second pattern does not have forwarding beams in the second time unit, i.e., the first pattern and the second pattern do not overlap in the second time unit, the NCR determines a beam corresponding to the first pattern in the second time unit. The first pattern does not have forwarding beams in the third time unit, i.e., the first pattern and the second pattern do not overlap in the third time unit, the NCR determines a beam corresponding to the second pattern in the third time unit.

FIG. 8 is another example diagram of determining beams in the embodiments of the present disclosure, in which the first pattern is configured and/or activated by first signaling, and the second pattern is configured and/or activated by second signaling. As shown in FIG. 8, the first pattern and the second pattern overlap in the first time unit and the forwarding beams are identical, the NCR determines to correspond to the beams in the first time unit.

As shown in FIG. 8, the second pattern does not have forwarding beams in the second time unit, i.e., the first pattern and the second pattern do not overlap in the second time unit, the NCR determines a beam corresponding to the first pattern in the second time unit. The first pattern does not have forwarding beams in the third time unit, i.e., the first pattern and the second pattern do not overlap in the third time unit, the NCR determines a beam corresponding to the second pattern in the third time unit.

In some embodiments, a priority of a configuration/pattern may be related to at least one of or a combination of the following priorities:
-- a priority of a beam indicated by the configuration/pattern;
-- a priority related to the configuration/pattern index;
-- a priority of signaling carrying the configuration/pattern;
-- a priority of a time-domain resource related to the configuration/pattern;
-- a priority of the forwarding signal related to the configuration/pattern, etc.

In some embodiments, a priority of a configuration/pattern may be indicated by a network device.

In some embodiments, the forwarding beams indicated by the m configurations include a first beam and a second beam, and the repeater determines that the first time associated with the first beam; wherein a priority of the first beam is highest, or, a priority of the configuration indicating the first beam is highest, or, a priority of signaling carrying the configuration which indicates the first beam is highest.

In some embodiments, a beam with a smaller index has a higher priority, or, a beam with a larger index has a higher priority, or, a beam with an index being a predetermined value has a highest priority, or, a beam with a smallest index among active or configured beams has a highest priority, or, a priority of a beam is predefined or is indicated by a network device. In realistic network deployment, a region covered by a network device has certain geographical specificity. Adopting this method may effectively improve the enhancement efficiency of network deployment by pointing a beam to a target area and adjusting and/or setting priority of beams.

In some embodiments, a configuration with a smaller index has a higher priority, or, a configuration with a larger index has a higher priority, or, a configuration with an index being a predetermined value has a highest priority, or, a configuration with a smallest index among active configurations has a highest priority, or, a priority of a configuration is predefined or is indicated by a network device. Indicating a priority by using an index of a configured configuration (pattern) and/or an index of an activated configuration (pattern) may save indication overhead and reduce the number of required control information bits, thereby improving the transmission efficiency of network.

In some embodiments, a priority of semi-static signaling is higher than a priority of dynamic signaling, or, a priority of signaling received later is higher than a priority of signaling received earlier, or, a priority of dynamic signaling is higher than a priority of semi-static signaling.

The above text schematically describes some situations of priorities, and the following text further describes priorities.

In some embodiments, it may be expressed as a priority of a beam: a priority of some beams is higher than that of some other beams.

For example, a beam used to forward certain signal has a high priority. For example, a beam used to forward a signal with a high priority such as an SSB has a high priority.

For another example, a priority of some beams configured at a network side is high, for example, some beam indexes are specified; or, the network side configures or indicates a priority of one beam.

For a further example, it is agreed in advance that a beam indicated by certain signaling has a high priority, for example, a beam configured by an OAM has a high priority, and/or, a beam indicated by semi-static signaling has a high priority, and/or, a beam indicated by dynamic signaling has a high priority.

In some embodiments, it may be expressed as a priority of a forwarded signal: the forwarded signal itself has a priority.

For example, a signal that may have a high priority includes at least one of the following: SS, SSB, SIB, MIB, RACH, PDCCH for scheduling Msg2 and/or Msg3 and/or Msg4 and/or Msg5, PDSCH for carrying Msg2 and/or Msg4, PUSCH for carrying Msg3 and/or Msg5, CSIRS, and SRS, etc. Of course, it may further be a signal other than the above signals, the present disclosure is not limited to this.

For example, NCR may distinguish a signal with a higher priority, and when a beam used to forward the signal conflicts with other beams, the NCR applies the beam used to forward the signal to perform transmission and/or reception.

For another example, NCR may distinguish a signal with a higher priority and some or all other signals, and when a beam used to forward the signal conflicts with other beams (for example it is used to forward some or all other signals, or a beam of a signal transmitted by it is uncertain), the NCR applies the beam used to forward the signal to perform transmission and/or reception.

For another example, a beam failure report (BFR) signal of a terminal equipment served by the NCR may also have a higher priority. In this way, the network side can timely receive BFR of a terminal side and performs appropriate processing, to prevent further link failure which is more serious, etc.

For a further example, a signal priority is indicated by the network side.

In some embodiments, it may be expressed as a priority of indication/configuration information or signaling.

For example, a beam configured by an OAM has a high priority, and/or, a semi-statically indicated beam has a high priority, and/or, a dynamically indicated beam has a high priority.

For another example, most of the important signals in the above examples are related to key processes and capabilities such as initial access, channel tracking, and channel measurement of a served terminal equipment. Therefore, semi-static signaling or signaling configured by the OAM may have a higher priority.

For a further example, when a terminal equipment served by NCR is serviced with a higher requirement of reliability and delay, a network side may transmit dynamic signaling to indicate a new beam for the NCR. In this situation, the priority may be divided into three categories, for example, a beam used to forward an SSB and so on has the highest priority, a priority of dynamic rewriting is the second, and a priority of other indications is lower.

In some embodiments, it may be expressed as a priority of a forwarding direction: the forwarding signal itself has a priority.

For example, a beam conflict may occur between uplink forwarding and downlink forwarding. The downlink forwarding beam may take precedence. The network side has a higher priority in communication, which can guarantee services of more terminal equipments served by the network device.

For another example, in a beam forwarding direction conflict, an uplink forwarding beam takes precedence, so that the network side can timely obtain information for request or report from a terminal equipment served by the NCR.

In some embodiments, it may be expressed as a priority of a time unit/time period used or forwarded by this beam.

For example, NCR may determine (according to a received indication, or system information acquired by itself) when more important signals may need to be forwarded, these times or time periods have a higher priority, and beams associated with these times or time periods have a higher priority when a beam conflict occurs.

The above text only schematically describes priorities; however, the present disclosure is not limited to this.

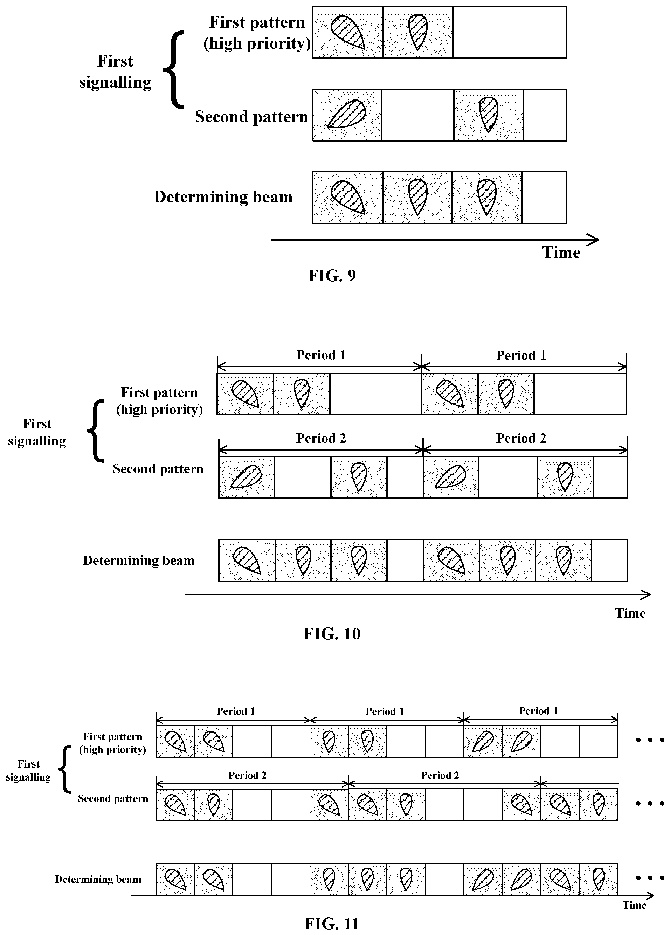

FIG. 9 is another example diagram of determining beams in the embodiments of the present disclosure, in which a first pattern and a second pattern are configured and/or activated by a first signaling, wherein a priority of the first pattern is higher than a priority of the second pattern. As shown in FIG. 9, the first pattern and the second pattern overlap in a first time unit and the forwarding beams are different; because the priority of the first pattern is high, the NCR determines a beam corresponding to the first pattern in the first time unit.

FIG. 10 is another example diagram of determining beams in the embodiments of the present disclosure, in which a first pattern and a second pattern are configured and/or activated by a first signaling, wherein a priority of the first pattern is higher than a priority of the second pattern. In addition, both the first pattern and the second pattern are periodic, and their periods are identical.

As shown in FIG. 10, the first pattern and the second pattern overlap in a first time unit and the forwarding beams are different; because the priority of the first pattern is high, the NCR determines a beam corresponding to the first pattern in the first time unit. The first pattern and the second pattern also overlap in a fifth time unit and the forwarding beams are different; because the priority of the first pattern is high, the NCR determines a beam corresponding to the first pattern in the fifth time unit.

FIG. 11 is another example diagram of determining beams in the embodiments of the present disclosure, in which a first pattern and a second pattern are configured and/or activated by a first signaling, wherein a priority of the first pattern is higher than a priority of the second pattern. In addition, both the first pattern and the second pattern are periodic, and their periods are different.

As shown in FIG. 11, the first pattern and the second pattern overlap in a first time unit and a second time unit; because the priority of the first pattern is high, the NCR determines a beam corresponding to the first pattern in the first time unit and the second time unit. Similarly, the first pattern and the second pattern overlap in a fifth time unit, a sixth time unit and a tenth time unit; because the priority of the first pattern is high, the NCR determines a beam corresponding to the first pattern in the fifth time unit, the sixth time unit and the tenth time unit.

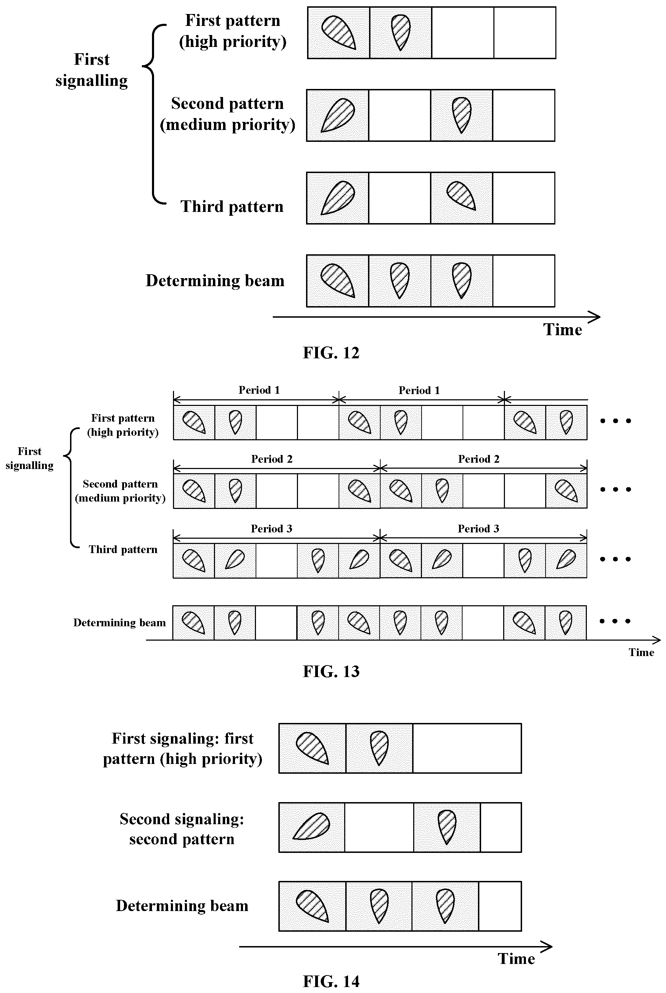

FIG. 12 is another example diagram of determining beams in the embodiments of the present disclosure, in which a first pattern, a second pattern and a third pattern are configured and/or activated by a first signaling, wherein a priority of the first pattern is highest, and a priority of the third pattern is lowest.

As shown in FIG. 12, the first pattern, the second pattern and the third pattern overlap in a first time unit, because the priority of the first pattern is highest, the NCR determines a beam corresponding to the first pattern in the first time unit. As shown in FIG. 12, the second pattern and the third pattern overlap in a third time unit, because the priority of the second pattern is higher than the priority of the third pattern, the NCR determines a beam corresponding to the second pattern in the third time unit.

FIG. 13 is another example diagram of determining beams in the embodiments of the present disclosure, in which a first pattern, a second pattern and a third pattern are configured and/or activated by a first signaling, wherein a priority of the first pattern is highest, and a priority of the third pattern is lowest. In addition, the first pattern, the second pattern and the third pattern are all periodic, and their periods are at least partially different.

As shown in FIG. 13, the first pattern, the second pattern and the third pattern overlap in a first time unit and a second time unit; because the priority of the first pattern is highest, the NCR determines a beam corresponding to the first pattern in the first time unit and the second time unit. Similarly, the first pattern, the second pattern and the third pattern overlap in a fifth time unit, a sixth time unit and a tenth time unit; because the priority of the first pattern is highest, the NCR determines a beam corresponding to the first pattern in the fifth time unit, the sixth time unit and the tenth time unit.

As shown in FIG. 13, the second pattern and the third pattern overlap in a seventh time unit, because the priority of the second pattern is higher than the priority of the third pattern, the NCR determines a beam corresponding to the second pattern in the seventh time unit.

FIG. 14 is another example diagram of determining beams in the embodiments of the present disclosure, in which a first pattern is configured and/or activated by a first signaling, and a second pattern is configured and/or activated by a second signaling, wherein a priority of the first signaling or the first pattern is higher than a priority of the second signaling or the second pattern. As shown in FIG. 14, the first pattern and the second pattern overlap in a first time unit and the forwarding beams are different; because the priority of the first signaling or the first pattern is high, the NCR determines a beam corresponding to the first pattern in the first time unit.

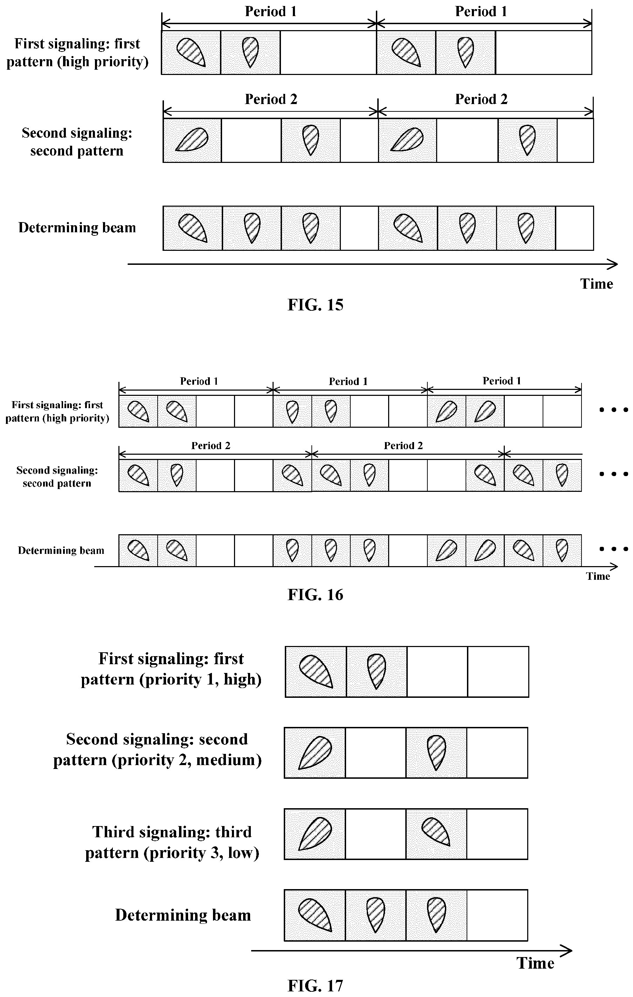

FIG. 15 is another example diagram of determining beams in the embodiments of the present disclosure, in which a first pattern is configured and/or activated by a first signaling, and a second pattern is configured and/or activated by a second signaling, wherein a priority of the first signaling or the first pattern is higher than a priority of the second signaling or the second pattern. In addition, both the first pattern and the second pattern are periodic, and their periods are identical.

As shown in FIG. 15, the first pattern and the second pattern overlap in a first time unit and the forwarding beams are different; because the priority of the first signaling or the first pattern is high, the NCR determines a beam corresponding to the first pattern in the first time unit. The first pattern and the second pattern also overlap in a fifth time unit and the forwarding beams are different; because the priority of the first signaling or the first pattern is high, the NCR determines a beam corresponding to the first pattern in the fifth time unit.

FIG. 16 is another example diagram of determining beams in the embodiments of the present disclosure, in which a first pattern is configured and/or activated by a first signaling, and a second pattern is configured and/or activated by a second signaling, wherein a priority of the first signaling or the first pattern is higher than a priority of the second signaling or the second pattern. In addition, both the first pattern and the second pattern are periodic, and their periods are different.

As shown in FIG. 16, the first pattern and the second pattern overlap in a first time unit and a second time unit; because the priority of the first signaling or the first pattern is high, the NCR determines a beam corresponding to the first pattern in the first time unit and the second time unit. Similarly, the first pattern and the second pattern overlap in a fifth time unit, a sixth time unit and a tenth time unit; because the priority of the first pattern is high, the NCR determines a beam corresponding to the first pattern in the fifth time unit, the sixth time unit and the tenth time unit.

FIG. 17 is another example diagram of determining beams in the embodiments of the present disclosure, in which a first pattern is configured and/or activated by a first signaling, a second pattern is configured and/or activated by a second signaling, and a third pattern is configured and/or activated by a third signaling, wherein a priority of the first signaling or the first pattern is highest, a priority of the third signaling or the third pattern is lowest.

As shown in FIG. 17, the first pattern, the second pattern and the third pattern overlap in a first time unit, because the priority of the first signaling or the first pattern is highest, the NCR determines a beam corresponding to the first pattern in the first time unit. As shown in FIG. 17, the second pattern and the third pattern overlap in a third time unit, because the priority of the second signaling or the second pattern is higher than the priority of the third signaling or the third pattern, the NCR determines a beam corresponding to the second pattern in the third time unit.

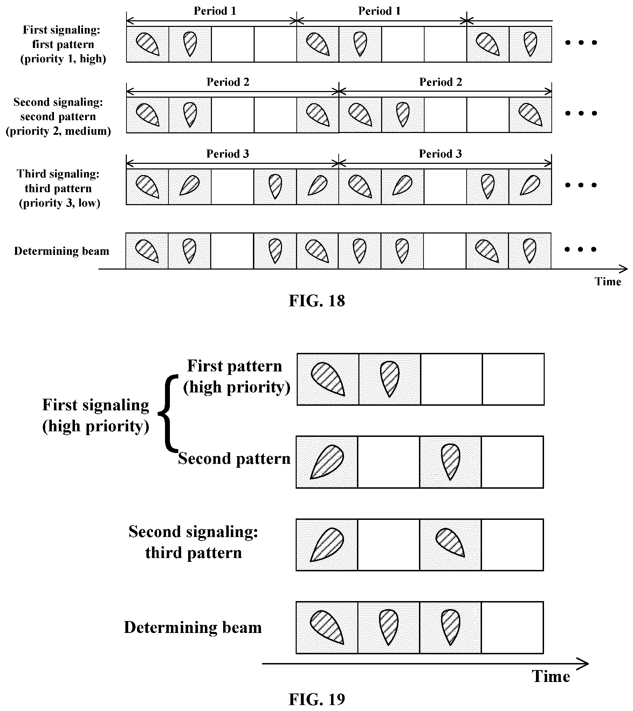

FIG. 18 is another example diagram of determining beams in the embodiments of the present disclosure, in which a first pattern is configured and/or activated by a first signaling, a second pattern is configured and/or activated by a second signaling, and a third pattern is configured and/or activated by a third signaling, wherein a priority of the first signaling or the first pattern is highest, a priority of the third signaling or the third pattern is lowest. In addition, the first pattern, the second pattern and the third pattern are all periodic, and their periods are at least partially different.

As shown in FIG. 18, the first pattern, the second pattern and the third pattern overlap in a first time unit and a second time unit; because the priority of the first signaling or the first pattern is highest, the NCR determines a beam corresponding to the first pattern in the first time unit and the second time unit. Similarly, the first pattern, the second pattern and the third pattern overlap in a fifth time unit, a sixth time unit and a tenth time unit; because the priority of the first signaling or the first pattern is highest, the NCR determines a beam corresponding to the first pattern in the fifth time unit, the sixth time unit and the tenth time unit.

As shown in FIG. 18, the second pattern and the third pattern overlap in a seventh time unit, because the priority of the second signaling or the second pattern is higher than the priority of the third signaling or the third pattern, the NCR determines a beam corresponding to the second pattern in the seventh time unit.

FIG. 19 is another example diagram of determining beams in the embodiments of the present disclosure, in which a first pattern and a second pattern are configured and/or activated by a first signaling, and a third pattern is configured and/or activated by a second signaling, wherein a priority of the first signaling is higher than a priority of the second signaling, a priority of the first pattern is higher than a priority of the second pattern.

As shown in FIG. 19, the first pattern, the second pattern and the third pattern overlap in a first time unit, because the priority of the first signaling is higher than the priority of the second signaling and the priority of the first pattern is higher than the priority of the second pattern, the NCR determines a beam corresponding to the first pattern in the first time unit. As shown in FIG. 19, the second pattern and the third pattern overlap in a third time unit, because the priority of the first signaling is higher than the priority of the second signaling, the NCR determines a beam corresponding to the second pattern in the third time unit.

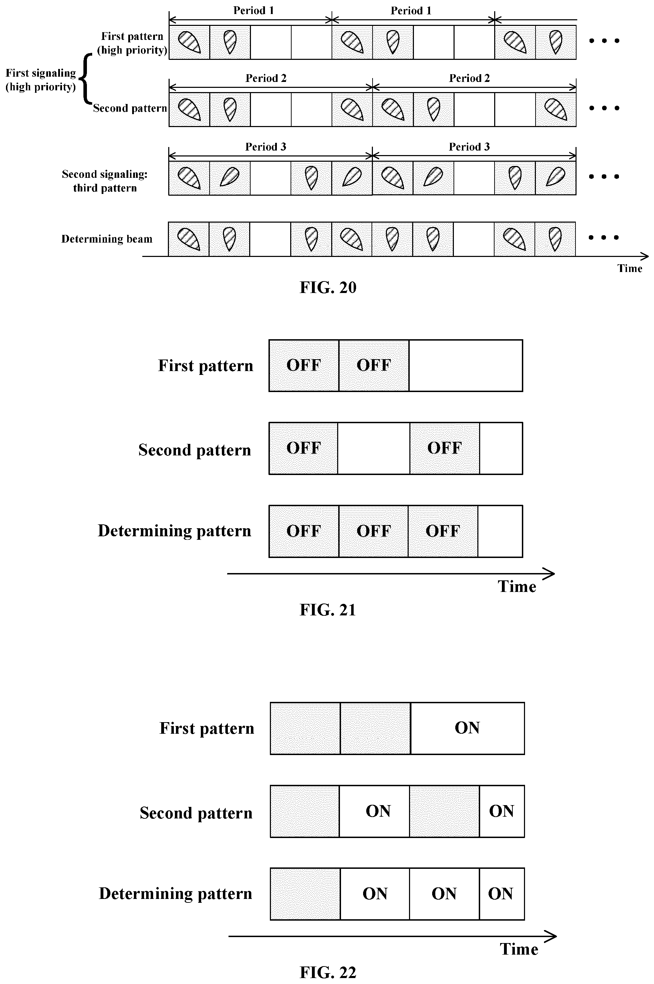

FIG. 20 is another example diagram of determining beams in the embodiments of the present disclosure, in which a first pattern and a second pattern are configured and/or activated by a first signaling, and a third pattern is configured and/or activated by a second signaling, wherein a priority of the first signaling is higher than a priority of the second signaling, a priority of the first pattern is higher than a priority of the second pattern. In addition, the first pattern, the second pattern and the third pattern are all periodic, and their periods are at least partially different.

As shown in FIG. 20, the first pattern, the second pattern and the third pattern overlap in a first time unit and a second time unit, because the priority of the first signaling is higher than the priority of the second signaling and the priority of the first pattern is higher than the priority of the second pattern, the NCR determines a beam corresponding to the first pattern in the first time unit and the second time unit. Similarly, the first pattern, the second pattern and the third pattern overlap in a fifth time unit, a sixth time unit and a tenth time unit, because the priority of the first signaling is higher than the priority of the second signaling and the priority of the first pattern is higher than the priority of the second pattern, the NCR determines a beam corresponding to the first pattern in the fifth time unit, the sixth time unit and the tenth time unit.

As shown in FIG. 20, the second pattern and the third pattern overlap in a seventh time unit, because the priority of the first signaling is higher than the priority of the second signaling, the NCR determines a beam corresponding to the second pattern at the seventh time unit.

The above text schematically describes determination of the forwarding beams, but the present disclosure is not limited to this, a forwarding beam within an overlapping time may further be determined according to other priority order(s). The following text describes determination of a forwarding state.

In some embodiments, m configurations of the at least two configurations are at least used to indicate one or more forwarding states associated with the first time; where, m is greater than or equal to 1 and less than or equal to N, N being the number of the at least two configurations.

In some embodiments, forwarding states indicated by the m configurations are all OFF, and the repeater determines not to perform forwarding in the first time; or, forwarding states indicated by the m configurations are all non-OFF, and the repeater determines to perform forwarding in the first time.

FIG. 21 is another example diagram of determining states in the embodiments of the present disclosure. As shown in FIG. 21, a first pattern and a second pattern overlap in a first time unit, because the first pattern and the second pattern are both OFF in the first time unit, the NCR determines that the first time unit is OFF.

FIG. 22 is another example diagram of determining states in the embodiments of the present disclosure. As shown in FIG. 22, a first pattern and a second pattern overlap at a second time unit, because the first pattern and the second pattern are both ON in the first time unit, the NCR determines that the first time unit is ON. Similarly, the first pattern and the second pattern overlap in a fourth time unit, the NCR determines that the fourth time unit is ON.

In some embodiments, the forwarding states indicated by the m configurations include OFF and non-OFF, and the repeater determines that the first time corresponds to an OFF state; wherein a priority of the OFF is higher, or, a priority of a configuration indicating the OFF is higher, or, a priority of signaling carrying a configuration indicating the OFF is higher.

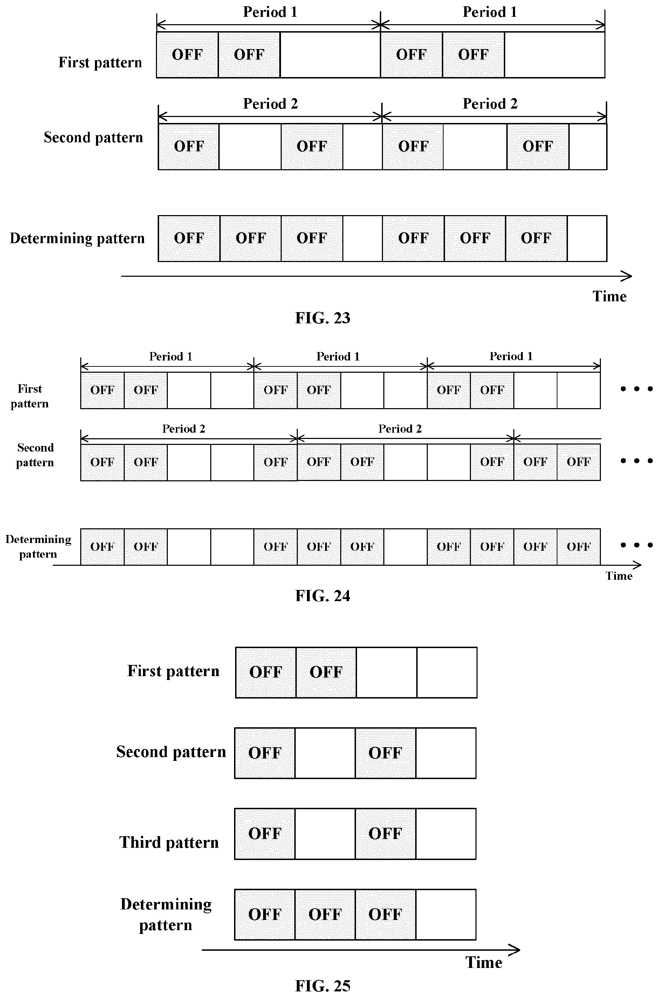

FIG. 23 is another example diagram of determining states in the embodiments of the present disclosure, both a first pattern and a second pattern are periodic, and their periods are identical. As shown in FIG. 23, because the OFF has a higher priority, for a time unit, if the first pattern and/or the second pattern is/are OFF, the NCR determines that the time unit is OFF.

FIG. 24 is another example diagram of determining states in the embodiments of the present disclosure, both a first pattern and a second pattern are periodic, and their periods are different. As shown in FIG. 24, because the OFF has a higher priority, for a time unit, if the first pattern and/or the second pattern is/are OFF, the NCR determines that the time unit is OFF.

FIG. 25 is another example diagram of determining states in the embodiments of the present disclosure. As shown in FIG. 25, because the OFF has a higher priority, for a time unit, if at least one of a first pattern, a second pattern and a third pattern is OFF, the NCR determines that the time unit is OFF.

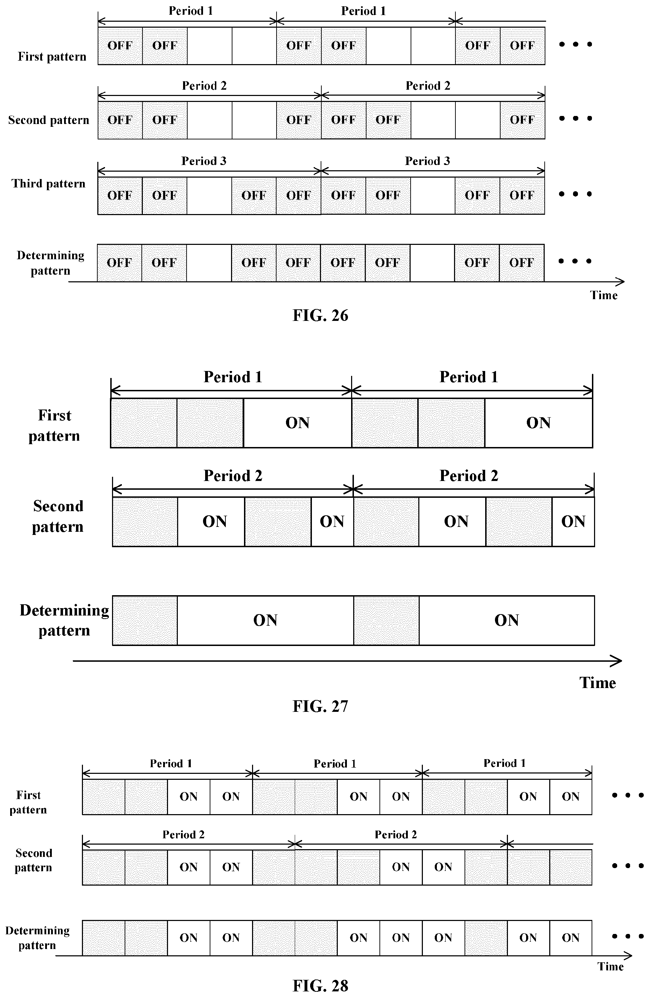

FIG. 26 is another example diagram of determining states in the embodiments of the present disclosure, a first pattern, a second pattern and a third pattern are all periodic, and their periods are at least partially different. As shown in FIG. 26, because the OFF has a higher priority, for a time unit, if at least one of the first pattern, the second pattern and the third patterns is OFF, the NCR determines that the time unit is OFF.

In some embodiments, the forwarding states indicated by the m configurations include OFF and non-OFF, and the repeater determines that the first time corresponds to a non-OFF state; wherein a priority of the non-OFF is higher, or, a priority of a configuration indicating the non-OFF is higher, or, a priority of signaling carrying a configuration indicating the non-OFF is higher.

FIG. 27 is another example diagram of determining states in the embodiments of the present disclosure, both a first pattern and a second pattern are periodic, and their periods are identical. As shown in FIG. 27, because the ON has a higher priority, for a time unit, if the first pattern and/or the second pattern is/are ON, the NCR determines that the time unit is ON.

FIG. 28 is another example diagram of determining states in the embodiments of the present disclosure, both a first pattern and a second pattern are periodic, and their periods are different. As shown in FIG. 28, because the ON has a higher priority, for a time unit, if the first pattern and/or the second pattern is/are ON, the NCR determines that the time unit is ON.

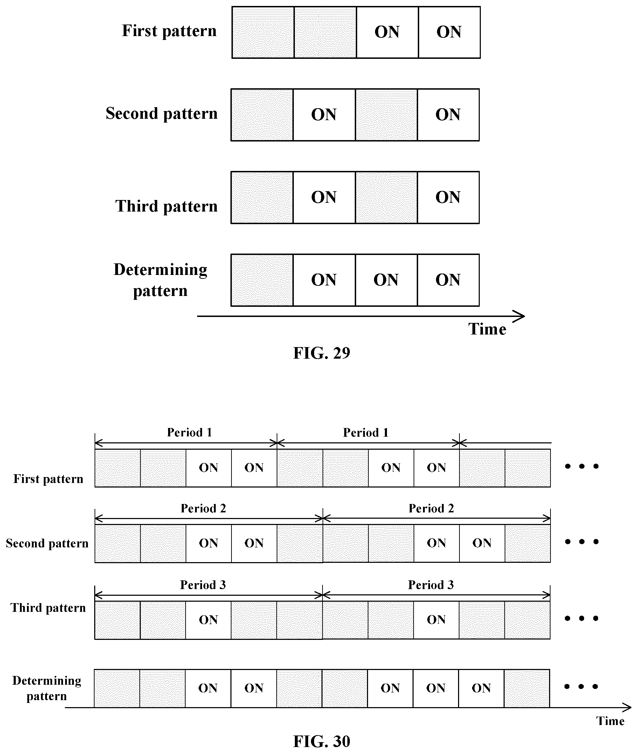

FIG. 29 is another example diagram of determining states in the embodiments of the present disclosure. As shown in FIG. 29, because the ON has a higher priority, for a time unit, if at least one of a first pattern, a second pattern and a third pattern is ON, the NCR determines that the time unit is ON.

FIG. 30 is another example diagram of determining states in the embodiments of the present disclosure, a first pattern, a second pattern and a third pattern are all periodic, and their periods are at least partially different. As shown in FIG. 30, because the ON has a higher priority, for a time unit, if at least one of the first pattern, the second pattern and the third patterns is ON, the NCR determines that the time unit is ON.

In the above embodiments, FIG. 6 to FIG. 20 take "forwarding beams in configurations" as an example, and FIG. 21 to FIG. 30 take "forwarding states in configurations" as an example to illustrate the present disclosure, but the present disclosure is not limited to this. For example, in at least two configurations, part of the configurations may include a forwarding beam, the other part of the configurations may include a forwarding state, and the forwarding beam and the forwarding state overlap in some time units. In these situations, a conflict may be handled according to a priority of a configuration, or a priority of a signal, or a priority of a time, etc., the preceding embodiments may be referred to.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, the repeater receives at least two configurations overlapping in a first time; and the repeater determines a forwarding beam and/or a forwarding state of the repeater in the first time according to the at least two configurations. Thereby, it can not only efficiently indicate the repeater and improve the transmission efficiency of the entire network, but also can reduce unnecessary interference and reduce system power consumption and save energy overhead.

### Embodiments of a second aspect

Embodiments of the present disclosure provide a repeater, the repeater may be e.g. the aforementioned NCR, or may be a network device or a terminal equipment having a forwarding function, or may be one or more parts or components configured in the NCR, the network device or the terminal equipment.

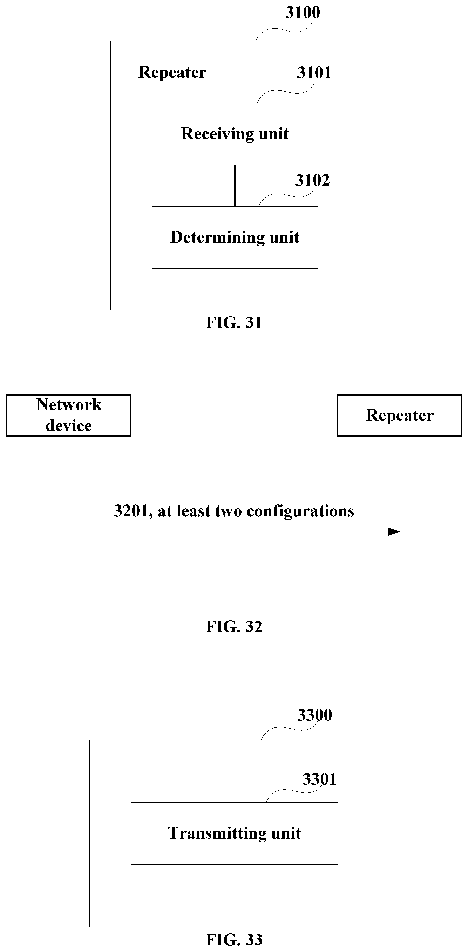

FIG. 31 is a schematic diagram of a repeater in the embodiments of a third aspect of the present disclosure. The principle of the repeater to solve a problem is the same as the method in the embodiments of the first aspect, thus its specific implementation may refer to the embodiments of the first aspect, the same contents will not be repeated.

As shown in FIG. 31, the repeater 3100 in the embodiments of the present disclosure includes:
a receiving unit 3101 configured to receive at least two configurations overlapping in a first time; and
a determining unit 3102 configured to determine a forwarding beam and/or a forwarding state of the repeater in the first time according to the at least two configurations.

In some embodiments, the at least two configurations are configurations of the same type, the at least two configurations are used to indicate the forwarding beam, and/or, the at least two configurations are used to indicate the forwarding state.

In some embodiments, the at least two configurations are configurations of different types.

In some embodiments, the forwarding beam is a beam on a backhaul link and/or a beam on an access link.

In some embodiments, the forwarding state is an OFF state and/or a non-OFF state, or, the forwarding state is an ON state and/or a non-ON state, or, the forwarding state is an OFF state and/or an ON state, or, the forwarding state is an active state and/or a sleep state, or, the forwarding state is an active state and/or an inactive state, or, the forwarding state is a non-sleep state and/or a sleep state.

In some embodiments, the first time includes one or more time units, the time units being at least one of the following: a symbol, a slot, or a subframe.

In some embodiments, the at least two configurations are carried by one signaling.

In some embodiments, the at least two configurations are carried by at least two signaling.

In some embodiments, the at least two signaling are signaling of the same type.

In some embodiments, the at least two signaling are signaling of different types.

In some embodiments, the determining unit 3102 is further used to determine the first time and/or a time duration which includes the first time according to one or more signaling carrying the at least two configurations and/or a predefined rule; or, determine the first time and/or a time duration which includes the first time according to other signaling and/or predefined rules.

In some embodiments, s configurations of the at least two configurations are periodic configurations; where, s is greater than or equal to 1 and less than or equal to N, N being the number of the at least two configurations.

In some embodiments, periods of the s periodic configurations are identical, or, in the s periodic configurations, at least two of them are with different periods.

In some embodiments, at least one of the signaling carrying the at least two configurations is further used to indicate at least part of configurations of the at least two configurations;
wherein the at least part of configurations includes a period and/or a starting position, or, a period and/or an offset.

In some embodiments, an n-th configuration of the at least two configurations is used to indicate a forwarding beam to which the first time corresponds; where, n is greater than or equal to 1 and less than or equal to N, N being the number of the at least two configurations.

In some embodiments, m configurations of the at least two configurations are at least used to indicate one or more forwarding beams related to the first time; where, m is greater than or equal to 1 and less than or equal to N, N being the number of the at least two configurations.

In some embodiments, forwarding beams indicated by the m configurations are all first beams, and the repeater determines that the first time corresponds to the first beam.

In some embodiments, the forwarding beams indicated by the m configurations include a first beam and a second beam, and the repeater determines that the first time associated with the first beam;
wherein a priority of the first beam is highest, or, a priority of a configuration indicating the first beam is highest, or, a priority of signaling carrying a configuration for indicating the first beam is highest.

In some embodiments, a beam with a smaller index has a higher priority, or, a beam with a larger index has a higher priority, or, a beam with an index being a predetermined value has a highest priority, or, a beam with a smallest index among active or configured beams has a highest priority, or, a priority of a beam is predefined or is indicated by a network device.

In some embodiments, a configuration with a smaller index has a higher priority, or, a configuration with a larger index has a higher priority, or, a configuration with an index being a predetermined value has a highest priority, or, a configuration with a smallest index among active configurations has a highest priority, or, a priority of a configuration is predefined or is indicated by a network device.

In some embodiments, a priority of semi-static signaling is higher than a priority of dynamic signaling, or, a priority of signaling received later is higher than a priority of signaling received earlier, or, a priority of dynamic signaling is higher than a priority of semi-static signaling.

In some embodiments, m configurations in the at least two configurations are at least used to indicate one or more forwarding states related to the first time; where, m is greater than or equal to 1 and less than or equal to N, N being the number of the at least two configurations.

In some embodiments, forwarding states indicated by the m configurations are all OFF, and the repeater determines not to perform forwarding in the first time, or,
forwarding states indicated by the m configurations are all non-OFF, and the repeater determines to perform forwarding in the first time.

In some embodiments, the forwarding states indicated by the m configurations include OFF and non-OFF, and the repeater determines that the first time corresponds to an OFF state;
wherein a priority of the OFF is higher, or, a priority of a configuration indicating the OFF is higher, or, a priority of signaling carrying a configuration indicating the OFF is higher.

In some embodiments, the forwarding states indicated by the m configurations include OFF and non-OFF, and the repeater determines that the first time corresponds to a non-OFF state;
wherein a priority of the non-OFF is higher, or, a priority of a configuration indicating the non-OFF is higher, or, a priority of signaling carrying a configuration indicating the non-OFF is higher.

Moreover, for the sake of simplicity, FIG. 31 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, the repeater receives at least two configurations overlapping in a first time; and the repeater determines a forwarding beam and/or a forwarding state of the repeater in the first time according to the at least two configurations. Thereby, it can not only efficiently indicate the repeater and improve the transmission efficiency of the entire network, but also can reduce unnecessary interference and reduce system power consumption and save energy overhead.

### Embodiments of a third aspect

The embodiments of the present disclosure provide an indicating method for a repeater, which is described from a network device side, the contents same as the embodiments of the first aspect are not repeated.

FIG. 32 is a schematic diagram of an indicating method for a repeater in the embodiments of the present disclosure, as shown in FIG. 32, the method includes:
3201, a network device transmits at least two configurations overlapping in a first time to a repeater;
wherein the at least two configurations are used by the repeater to determine a forwarding beam and/or a forwarding state of the repeater in the first time.

It should be noted that the above FIG. 32 is only schematic description of the embodiments of the present disclosure, but the present disclosure is not limited to this. For example, an execution step of each operation may be adjusted appropriately, moreover other some operations may be added or one or more operations may be removed. Persons skilled in the art may make appropriate modifications according to the above contents, not limited to the records in the above FIG. 32.

In some embodiments, the network device may transmit a forwarding signal to the repeater (for example, a destination is a terminal equipment, forwarded by the repeater) and/or a communication signal (for example, the destination is the repeater), or, the network device may further receive a forwarding signal from the repeater (for example, generated and transmitted by the terminal equipment, and forwarded by the repeater) and/or a communication signal (for example, generated and transmitted by the repeater).

In some embodiments, the at least two configurations are configurations of the same type.

In some embodiments, the at least two configurations are used to indicate the forwarding beam, and/or, the at least two configurations are used to indicate the forwarding state.

In some embodiments, the at least two configurations are configurations of different types.

In some embodiments, the forwarding beam is a beam on a backhaul link and/or a beam on an access link.

In some embodiments, the forwarding state is an OFF state and/or a non-OFF state, or, the forwarding state is an ON state and/or a non-ON state, or, the forwarding state is an OFF state and/or an ON state, or, the forwarding state is an active state and/or a sleep state, or, the forwarding state is an active state and/or an inactive state, or, the forwarding state is a non-sleep state and/or a sleep state.

In some embodiments, the first time includes one or more time units, the time units being at least one of the following: a symbol, a slot, or a subframe.

In some embodiments, the at least two configurations are carried by one signaling.

In some embodiments, the at least two configurations are carried by at least two signaling.

In some embodiments, the at least two signaling are signaling of the same type.

In some embodiments, the at least two signaling are signaling of different types.

In some embodiments, s configurations of the at least two configurations are periodic configurations; where, s is greater than or equal to 1 and less than or equal to N, N being the number of the at least two configurations.

In some embodiments, periods of the s periodic configurations are identical, or, in the s periodic configurations, at least two of them are with different periods.

In some embodiments, at least one of the signaling carrying the at least two configurations is further used to indicate at least part of configurations of the at least two configurations.

In some embodiments, the at least part of configurations includes a period and/or a starting position, or, a period and/or an offset.

In some embodiments, an n-th configuration of the at least two configurations is used to indicate a forwarding beam to which the first time corresponds; where, n is greater than or equal to 1 and less than or equal to N, N being the number of the at least two configurations.

In some embodiments, m configurations of the at least two configurations are at least used to indicate one or more forwarding beams related to the first time; where, m is greater than or equal to 1 and less than or equal to N, N being the number of the at least two configurations.

In some embodiments, m configurations of the at least two configurations are at least used to indicate one or more forwarding states related to the first time; where, m is greater than or equal to 1 and less than or equal to N, N being the number of the at least two configurations.

The above only describes each step or process related to the present disclosure, but the present disclosure is not limited to this. The method in the embodiments of the present disclosure may further include other steps or processes. For specific contents of these steps or processes, relevant technologies may be referred to.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, the repeater receives at least two configurations overlapping in a first time; and the repeater determines a forwarding beam and/or a forwarding state of the repeater in the first time according to the at least two configurations. Thereby, it can not only efficiently indicate the repeater and improve the transmission efficiency of the entire network, but also can reduce unnecessary interference and reduce system power consumption and save energy overhead.

### Embodiments of a fourth aspect

The embodiments of the present disclosure provide a network device.

FIG. 33 is a schematic diagram of a network device in the embodiments of a third aspect of the present disclosure. The principle of the network device to solve a problem is the same as the method in the embodiments of the third aspect, thus its specific implementation can refer to the embodiments of the third aspect, the same contents will not be repeated.

As shown in FIG. 33, the network device 3300 in the embodiments of the present disclosure includes:
a transmitting unit 3301 configured to transmit at least two configurations overlapping in a first time to a repeater;
wherein the at least two configurations are used by the repeater to determine a forwarding beam and/or a forwarding state of the repeater in the first time.

In some embodiments, the network device may transmit a forwarding signal to the repeater (for example, a destination is a terminal equipment, forwarded by the repeater) and/or a communication signal (for example, the destination is the repeater), or, the network device may further receive a forwarding signal from the repeater (for example, generated and transmitted by the terminal equipment, and forwarded by the repeater) and/or a communication signal (for example, generated and transmitted by the repeater).

It's worth noting that the above only describes components or modules related to the present disclosure, but the present disclosure is not limited to this. The network device 3300 in the embodiments of the present disclosure may further include other components or modules. For detailed contents of these components or modules, relevant technologies can be referred to.

Moreover, for the sake of simplicity, FIG. 33 only exemplarily shows a connection relationship or signal direction between components or modules, however persons skilled in the art should know that various relevant technologies such as bus connection may be used. The above components or modules may be realized by a hardware facility such as a processor, a memory, a transmitter, a receiver, etc. The embodiments of the present disclosure have no limitation to this.

Each of the above embodiments is only illustrative for the present disclosure, but the present disclosure is not limited to this, appropriate modifications may be further made based on the above each embodiment. For example, each of the above embodiments may be used individually, or one or more of the above embodiments may be combined.

According to the embodiments of the present disclosure, the repeater receives at least two configurations overlapping in a first time; and the repeater determines a forwarding beam and/or a forwarding state of the repeater in the first time according to the at least two configurations. Thereby, it can not only efficiently indicate the repeater and improve the transmission efficiency of the entire network, but also can reduce unnecessary interference and reduce system power consumption and save energy overhead.

### Embodiments of a fifth aspect

The embodiments of the present disclosure provide a communication system. FIG. 1 is a schematic diagram of a communication system in the embodiments of the present disclosure. As shown in FIG. 1, the communication system 100 includes a network device 101, a repeater 102 and a terminal equipment 103. For the sake of simplicity, FIG. 1 only takes a network device, a repeater and a terminal equipment as examples to describe, but the embodiments of the present disclosure are not limited to this.

In the embodiments of the present disclosure, transmission of existing or further implementable services can be carried out between the network device 101 and the terminal equipment 103. For example, these services may include but be not limited to: enhanced Mobile Broadband (eMBB), massive Machine Type Communication (mMTC), Ultra-Reliable Low-Latency Communication (URLLC), Internet of Vehicles (V2X) communication and so on. The repeater 102 is configured to perform the indicating method for a repeater as described in the embodiments of the first aspect, and the network device 101 is configured to perform the indicating method for a repeater as described in the embodiments of the third aspect, their contents are incorporated here and are not repeated here.

The embodiments of the present disclosure further provide an electronic device, the electronic device e.g. is a repeater or a network device.

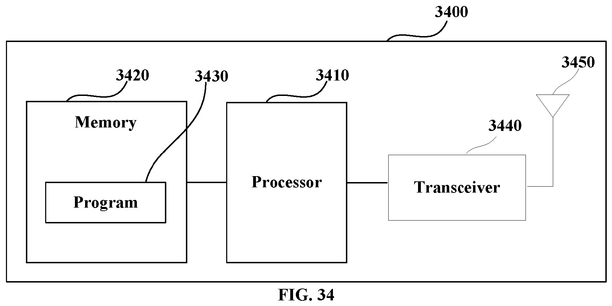

FIG. 34 is a schematic diagram of composition of an electronic device in the embodiments of the present disclosure. As shown in FIG. 34, the electronic device 3400 may include: a processor 3410 (such as a central processing unit (CPU)) and a memory 3420; the memory 3420 is coupled to the processor 3410. The memory 3420 may store various data; moreover, further stores a program 3430 for information processing, and executes the program 3430 under the control of the processor 3410.

For example, the processor 3410 may be configured to execute a program to implement the indicating method for a repeater as described in the embodiments of the first aspect. For example, the processor 3410 may be configured to perform the following control: receiving at least two configurations overlapping in a first time; and determining a forwarding beam and/or a forwarding state of the repeater in the first time according to the at least two configurations.

For another example, the processor 3410 may be configured to execute a program to implement the indicating method for a repeater as described in the embodiments of the third aspect. For example, the processor 3410 may be configured to perform the following control: transmitting at least two configurations overlapping in a first time to a repeater; wherein the at least two configurations are used by the repeater to determine a forwarding beam and/or a forwarding state of the repeater in the first time.

In addition, as shown in FIG. 34, the electronic device 3400 may further include: a transceiver 3440 and an antenna 3450, etc.; wherein the functions of said components are similar to relevant arts, which are not repeated here. It's worth noting that the electronic device 3400 does not have to include all the components shown in FIG. 34. Moreover, the electronic device 3400 may also include components not shown in FIG. 34, prior arts may be referred to.

The embodiments of the present disclosure further provide a computer readable program, wherein when the program is executed in a repeater, the program enables a computer to execute the indicating method for a repeater as described in the embodiments of the first aspect, in the repeater.

The embodiments of the present disclosure further provide a storage medium in which a computer readable program is stored, wherein the computer readable program enables a computer to execute the indicating method for a repeater as described in the embodiments of the first aspect, in a repeater.

The embodiments of the present disclosure further provide a computer readable program, wherein when a network device executes the program, the program enables a computer in the network device to execute the indicating method for a repeater as described in the embodiments of the third aspect.

The embodiments of the present disclosure further provide a storage medium in which a computer readable program is stored, wherein the computer readable program enables a computer to execute the indicating method for a repeater as described in the embodiments of the third aspect, in a network device.

The apparatus and method in the present disclosure may be realized by hardware, or may be realized by combining hardware with software. The present disclosure relates to such a computer readable program, when the program is executed by a logic component, the computer readable program enables the logic component to realize the device described in the above text or a constituent component, or enables the logic component to realize various methods or steps described in the above text. The logic component is e.g. a field programmable logic component, a microprocessor, a processor used in a computer, etc. The present disclosure further relates to a storage medium storing the program, such as a hard disk, a magnetic disk, an optical disk, a DVD, a flash memory and the like.

By combining with the method/device described in the embodiments of the present disclosure, it may be directly reflected as hardware, a software executed by a processor, or a combination of the two. For example, one or more in the functional block diagram or one or more combinations in the functional block diagram as shown in the drawings may correspond to software modules of a computer program flow, and may also correspond to hardware modules. These software modules may respectively correspond to the steps as shown in the drawings. These hardware modules may be realized by solidifying these software modules e.g. using a field-programmable gate array (FPGA).

A software module may be located in a RAM memory, a flash memory, a ROM memory, an EPROM memory, an EEPROM memory, a register, a hard disk, a mobile magnetic disk, a CD-ROM or a storage medium in any other form as known in this field. A storage medium may be coupled to a processor, thereby enabling the processor to read information from the storage medium, and to write the information into the storage medium; or the storage medium may be a constituent part of the processor. The processor and the storage medium may be located in an ASIC. The software module may be stored in a memory of a mobile terminal, and may also be stored in a memory card of the mobile terminal. For example, if a device (such as the mobile terminal) adopts a MEGA-SIM card with a larger capacity or a flash memory apparatus with a large capacity, the software module may be stored in the MEGA-SIM card or the flash memory apparatus with a large capacity.

One or more in the functional block diagram or one or more combinations in the functional block diagram as described in the drawings may be implemented as a general-purpose processor for performing the functions described in the present disclosure, a digital signal processor (DSP), an application-specific integrated circuit (ASIC), a field-programmable gate array (FPGA) or other programmable logic device, discrete gate or transistor logic device, discrete hardware components or any combination thereof. One or more in the functional block diagram or one or more combinations in the functional block diagram as described in the drawings may further be implemented as a combination of computer equipments, such as a combination of a DSP and a microprocessor, a plurality of microprocessors, one or more microprocessors combined and communicating with the DSP or any other such configuration.

The present disclosure is described by combining with the specific implementations, however persons skilled in the art should clearly know that these descriptions are exemplary and do not limit the protection scope of the present disclosure. Persons skilled in the art may make various variations and modifications to the present disclosure according to the spirit and principle of the present disclosure, these variations and modifications are also within the scope of the present disclosure.

Regarding the above implementations disclosed in this embodiment, the following supplements are further disclosed:
1. An indicating method for a repeater, including:
   a repeater receives at least two configurations overlapping in a first time; and
   the repeater determines a forwarding beam and/or a forwarding state of the repeater in the first time according to the at least two configurations.
2. The method according to Supplement 1, wherein the at least two configurations are configurations of the same type.
3. The method according to Supplement 2, wherein the at least two configurations are used to indicate the forwarding beam, and/or, the at least two configurations are used to indicate the forwarding state.
4. The method according to Supplement 1, wherein the at least two configurations are configurations of different types.
5. The method according to any one of Supplements 1 to 4, wherein the forwarding beam is a beam on a backhaul link and/or a beam on an access link.
6. The method according to any one of Supplements 1 to 5, wherein the forwarding state is an OFF state and/or a non-OFF state, or, the forwarding state is an ON state and/or a non-ON state, or, the forwarding state is an OFF state and/or an ON state, or, the forwarding state is an active state and/or a sleep state, or, the forwarding state is an active state and/or an inactive state, or, the forwarding state is a non-sleep state and/or a sleep state.
7. The method according to any one of Supplements 1 to 6, wherein the first time comprises one or more time units, the time units being at least one of the following: a symbol, a slot, or a subframe.
8. The method according to any one of Supplements 1 to 7, wherein the at least two configurations are carried by one signaling, or, the at least two configurations are carried by at least two signaling.
9. The method according to Supplement 8, wherein the at least two signaling are signaling of the same type, or, the at least two signaling are signaling of different types.
10. The method according to any one of Supplements 1 to 9, wherein the method further includes:
   the repeater determines the first time and/or the time durations including the first time according to one or more signaling carrying the at least two configurations and/or a predefined rule; or
   the repeater determines the first time and/or the time durations including the first time according to other signaling and/or predefined rules.
11. The method according to any one of Supplements 1 to 10, wherein s configurations in the at least two configurations are periodic configurations; where, s is greater than or equal to 1 and less than or equal to N, N being the number of the at least two configurations.
12. The method according to Supplement 11, wherein periods of the s periodic configurations are identical, or, in the s periodic configurations, at least two of them are with different periods.
13. The method according to any one of Supplements 1 to 12, wherein at least one of the signaling carrying the at least two configurations is further used to indicate at least part of configurations of the at least two configurations.
14. The method according to Supplement 13, wherein the at least part of configurations comprises a period and/or a starting position, or, a period and/or an offset.
15. The method according to any one of Supplements 1 to 14, wherein an n-th configuration of the at least two configurations is used to indicate a forwarding beam to which the first time corresponds; where, n is greater than or equal to 1 and less than or equal to N, N being the number of the at least two configurations.
16. The method according to any one of Supplements 1 to 15, wherein m configurations of the at least two configurations are at least used to indicate one or more forwarding beams related to the first time; where, m is greater than or equal to 1 and less than or equal to N, N being the number of the at least two configurations.
17. The method according to Supplement 16, wherein forwarding beams indicated by the m configurations are all first beams, and the repeater determines that the first time is associated with the first beam.
18. The method according to Supplement 16, wherein the forwarding beams indicated by the m configurations comprise a first beam and a second beam, and the repeater determines that the first time is associated with the first beam;
   wherein a priority of the first beam is highest, or, a priority of a configuration indicating the first beam is highest, or, a priority of signaling carrying a configuration for indicating the first beam is highest.
19. The method according to Supplement 18, wherein a beam with a smaller index has a higher priority, or, a beam with a larger index has a higher priority, or, a beam with an index being a predetermined value has a highest priority, or, a beam with a smallest index among active or configured beams has a highest priority, or, a priority of a beam is predefined or is indicated by a network device.
20. The method according to Supplement 18, wherein a configuration with a smaller index has a higher priority, or, a configuration with a larger index has a higher priority, or, a configuration with an index being a predetermined value has a highest priority, or, a configuration with a smallest index among active configurations has a highest priority, or, a priority of a configuration is predefined or is indicated by a network device.
21. The method according to Supplement 18, wherein a priority of semi-static signaling is higher than a priority of dynamic signaling, or, a priority of signaling received later is higher than a priority of signaling received earlier, or, a priority of dynamic signaling is higher than a priority of semi-static signaling.
22. The method according to any one of Supplements 1 to 15, wherein m configurations of the at least two configurations are at least used to indicate one or more forwarding states related to the first time; where, m is greater than or equal to 1 and less than or equal to N, N being the number of the at least two configurations.
23. The method according to Supplement 22, wherein forwarding states indicated by the m configurations are all OFF, and the repeater determines not to perform forwarding in the first time, or,
   forwarding states indicated by the m configurations are all non-OFF, and the repeater determines to perform forwarding in the first time.
24. The method according to Supplement 22, wherein the forwarding states indicated by the m configurations comprise OFF and non-OFF, and the repeater determines that the first time corresponds to an OFF state;
   wherein a priority of the OFF is higher, or, a priority of a configuration indicating the OFF is higher, or, a priority of signaling carrying a configuration indicating the OFF is higher.
25. The method according to Supplement 22, wherein the forwarding states indicated by the m configurations comprise OFF and non-OFF, and the repeater determines that the first time corresponds to a non-OFF state;
   wherein a priority of the non-OFF is higher, or, a priority of a configuration indicating the non-OFF is higher, or, a priority of signaling carrying a configuration indicating the non-OFF is higher.
26. An indicating method for a repeater, including:
   a network device transmits at least two configurations overlapping in a first time to a repeater;
   wherein the at least two configurations are used by the repeater to determine a forwarding beam and/or a forwarding state of the repeater in the first time.
27. The method according to Supplement 26, wherein the at least two configurations are configurations of the same type.
28. The method according to Supplement 27, wherein the at least two configurations are used to indicate the forwarding beam, and/or, the at least two configurations are used to indicate the forwarding state.
29. The method according to Supplement 26, wherein the at least two configurations are configurations of different types.
30. The method according to any one of Supplements 26 to 29, wherein the forwarding beam is a beam on a backhaul link and/or a beam on an access link.
31. The method according to any one of Supplements 26 to 30, wherein the forwarding state is an OFF state and/or a non-OFF state, or, the forwarding state is an ON state and/or a non-ON state, or, the forwarding state is an OFF state and/or an ON state, or, the forwarding state is an active state and/or a sleep state, or, the forwarding state is an active state and/or an inactive state, or, the forwarding state is a non-sleep state and/or a sleep state.
32. The method according to any one of Supplements 26 to 31, wherein the first time comprises one or more time units, the time units being at least one of the following: a symbol, a slot, or a subframe.
33. The method according to any one of Supplements 26 to 32, wherein the at least two configurations are carried by one signaling, or, the at least two configurations are carried by at least two signaling.
34. The method according to Supplement 33, wherein the at least two signaling are signaling of the same type, or, the at least two signaling are signaling of different types.
35. The method according to any one of Supplements 26 to 34, wherein s configurations of the at least two configurations are periodic configurations; where, s is greater than or equal to 1 and less than or equal to N, N being the number of the at least two configurations.
36. The method according to Supplement 35, wherein periods of the s periodic configurations are identical, or, in the s periodic configurations, at least two of them are with different periods.
37. The method according to any one of Supplements 26 to 36, wherein at least one of the signaling carrying the at least two configurations is further used to indicate at least part of configurations of the at least two configurations.
38. The method according to Supplement 37, wherein the at least part of configurations comprises a period and/or a starting position, or, a period and/or an offset.
39. The method according to any one of Supplements 26 to 38, wherein an n-th configuration of the at least two configurations is used to indicate a forwarding beam to which the first time corresponds; where, n is greater than or equal to 1 and less than or equal to N, N being the number of the at least two configurations.
40. The method according to any one of Supplements 26 to 39, wherein m configurations of the at least two configurations are at least used to indicate one or more forwarding beams related to the first time; where, m is greater than or equal to 1 and less than or equal to N, N being the number of the at least two configurations.
41. The method according to any one of Supplements 26 to 39, wherein m configurations of the at least two configurations are at least used to indicate one or more forwarding states related to the first time; where, m is greater than or equal to 1 and less than or equal to N, N being the number of the at least two configurations.
42. A repeater, comprising a memory and a processor, the memory storing a computer program, and the processor being configured to execute the computer program to implement the indicating method for a repeater according to any one of Supplements 1 to 25.
43. A network device, comprising a memory and a processor, the memory storing a computer program, and the processor being configured to execute the computer program to implement the indicating method for a repeater according to any one of Supplements 26 to 41.

## Claims

1. A repeater, comprising:
a receiving unit configured to receive at least two configurations overlapping in a first time; and
a determining unit configured to determine a forwarding beam and/or a forwarding state of the repeater in the first time according to the at least two configurations.

2. The repeater according to claim 1, wherein the at least two configurations are configurations of the same type, the at least two configurations are used to indicate the forwarding beam, and/or, the at least two configurations are used to indicate the forwarding state;
or, the at least two configurations are configurations of different types.

3. The repeater according to claim 1, wherein the forwarding beam is a beam on a backhaul link and/or a beam on an access link.

4. The repeater according to claim 1, wherein the forwarding state is an OFF state and/or a non-OFF state, or, the forwarding state is an ON state and/or a non-ON state, or, the forwarding state is an OFF state and/or an ON state, or, the forwarding state is an active state and/or a sleep state, or, the forwarding state is an active state and/or an inactive state, or, the forwarding state is a non-sleep state and/or a sleep state.

5. The repeater according to claim 1, wherein the first time comprises one or more time units, the time units being at least one of the following: a symbol, a slot, or a subframe.

6. The repeater according to claim 1, wherein the at least two configurations are carried by one signaling,
or, the at least two configurations are carried by at least two signaling, wherein the at least two signaling are signaling of the same type, or, the at least two signaling are signaling of different types.

7. The repeater according to claim 1, wherein the determining unit is further configured to:
determine the first time and/or a time duration including the first time according to one or more signaling carrying the at least two configurations and/or a predefined rule; or
determine the first time and/or a time duration including the first time according to other signaling and/or predefined rules.

8. The repeater according to claim 1, wherein s configurations of the at least two configurations are periodic configurations; where, s is greater than or equal to 1 and less than or equal to N, N being the number of the at least two configurations;
wherein periods of the s periodic configurations are identical, or, in the s periodic configurations, at least two of them are with different periods.

9. The repeater according to claim 1, wherein at least one of the signaling carrying the at least two configurations is further used to indicate at least part of configurations of the at least two configurations;
wherein the at least part of configurations comprises a period and/or a starting position, or, a period and/or an offset.

10. The repeater according to claim 1, wherein an n-th configuration of the at least two configurations is used to indicate a forwarding beam to which the first time corresponds; where, n is greater than or equal to 1 and less than or equal to N, N being the number of the at least two configurations.

11. The repeater according to claim 1, wherein m configurations of the at least two configurations are at least used to indicate one or more forwarding beams associated with the first time; where, m is greater than or equal to 1 and less than or equal to N, N being the number of the at least two configurations.

12. The repeater according to claim 11, wherein forwarding beams indicated by the m configurations are all first beams, and the repeater determines that the first time is associated with the first beam.

13. The repeater according to claim 11, wherein the forwarding beams indicated by the m configurations comprise a first beam and a second beam, and the repeater determines that the first time is associated with the first beam;
wherein a priority of the first beam is highest, or, a priority of a configuration indicating the first beam is highest, or, a priority of signaling carrying a configuration for indicating the first beam is highest.

14. The repeater according to claim 13, wherein a beam with a smaller index has a higher priority, or, a beam with a larger index has a higher priority, or, a beam with an index being a predetermined value has a highest priority, or, a beam with a smallest index among active or configured beams has a highest priority, or, a priority of a beam is predefined or is indicated by a network device;
wherein a configuration with a smaller index has a higher priority, or, a configuration with a larger index has a higher priority, or, a configuration with an index being a predetermined value has a highest priority, or, a configuration with a smallest index among active configurations has a highest priority, or, a priority of a configuration is predefined or is indicated by a network device;
wherein a priority of semi-static signaling is higher than a priority of dynamic signaling, or, a priority of signaling received later is higher than a priority of signaling received earlier, or, a priority of dynamic signaling is higher than a priority of semi-static signaling.

15. The repeater according to claim 1, wherein m configurations of the at least two configurations are at least used to indicate one or more forwarding states associated with the first time; where, m is greater than or equal to 1 and less than or equal to N, N being the number of the at least two configurations.

16. The repeater according to claim 15, wherein forwarding states indicated by the m configurations are all OFF, and the repeater determines not to perform forwarding in the first time, or,
forwarding states indicated by the m configurations are all non-OFF, and the repeater determines to perform forwarding in the first time.

17. The repeater according to claim 16, wherein the forwarding states indicated by the m configurations comprise OFF and non-OFF, and the repeater determines that the first time is associated with an OFF state;
wherein a priority of the OFF is higher, or, a priority of a configuration indicating the OFF is higher, or, a priority of signaling carrying a configuration indicating the OFF is higher.

18. The repeater according to claim 16, wherein the forwarding states indicated by the m configurations comprise OFF and non-OFF, and the repeater determines that the first time corresponds to a non-OFF state;
wherein a priority of the non-OFF is higher, or, a priority of a configuration indicating the non-OFF is higher, or, a priority of signaling carrying a configuration indicating the non-OFF is higher.

19. A network device, comprising:
a transmitting unit configured to transmit at least two configurations overlapping in a first time to a repeater;
wherein the at least two configurations are used by the repeater to determine a forwarding beam and/or a forwarding state of the repeater in the first time.

20. A communication system, comprising:
a network device configured to transmit at least two configurations overlapping in a first time to a repeater; and
the repeater configured to determine a forwarding beam and/or a forwarding state of the repeater in the first time according to the at least two configurations.
